# EUROPÄISCHE PATENTSCHRIFT

(11) **EP 2 468 560 B1**
(45) Veröffentlichungstag und Bekanntmachung des Hinweises auf die Patenterteilung: **03.07.2013**
(21) Anmeldenummer: 11009838.1
(22) Anmeldetag: 14.12.2011
(51) Int. Cl.: B60K 15/035

(54) **Kraftstoffsystem**
Fuel system
Système de carburant

(30) Priorität: 21.12.2010 DE 102010055317
(43) Veröffentlichungstag der Anmeldung: 27.06.2012
(73) Patentinhaber: Audi AG, 85045 Ingolstadt (DE)
(72) Erfinder: Hagen, Harald, 95473 Creussen (DE)
(74) Vertreter: Lehle, Josef

(56) Entgegenhaltungen:
- WO-A1-2007/031466

## Beschreibung

Die Erfindung betrifft ein Kraftstoffsystem, insbesondere eines Kraftfahrzeugs, mit einem Kraftstofftank und einer Entlüftungseinrichtung zur Entlüftung des Kraftstofftanks, wobei die Entlüftungseinrichtung über zumindest eine einen Zwischenspeicher für flüssigen Kraftstoff aufweisende Abscheidevorrichtung und eine als Saugstrahlpumpe ausgebildete Kraftstofffördereinrichtung zur Förderung von Kraftstoff aus dem Zwischenspeicher verfügt.

Kraftstoffsysteme der eingangs genannten Art sind aus dem Stand der Technik bekannt. Sie sind beispielsweise einem Kraftfahrzeug beziehungsweise einem Antriebssystem des Kraftfahrzeugs zugeordnet. Das Antriebssystem verfügt dabei insbesondere über zumindest eine Brennkraftmaschine und ist beispielsweise als Hybridantriebssystem ausgebildet, weist also die Brennkraftmaschine sowie zumindest eine elektrische Maschine auf, wobei die Brennkraftmaschine und die elektrische Maschine ein Antriebsmoment des Antriebssystems zumindest zeitweise gemeinsam erzeugen. Der Brennkraftmaschine wird von dem Kraftstoffsystem Kraftstoff aus dem Kraftstofftank zugeführt. Häufig wird als Kraftstoff ein flüchtiger Kohlenwasserstoffkraftstoff, beispielsweise Benzin, verwendet. Der Kraftstofftank enthält daher normalerweise sowohl ein Volumen an flüssigem Kraftstoff als auch ein Volumen an gasförmigem Kraftstoff, welches insbesondere oberhalb des flüssigen Kraftstoffs anfällt. Der Kraftstofftank kann ein geschlossener Tank, insbesondere ein Drucktank, oder ein teilgeschlossener, insbesondere auch druckloser, Tank sein. Der geschlossene Tank wird insbesondere zur Reduzierung von Emissionen verwendet.

Bedingt durch Schwankungen der Temperatur des Kraftstoffs, beispielsweise verursacht durch Veränderungen der Umgebungstemperatur, können Druckschwankungen in dem Kraftstofftank auftreten. Aus diesem Grund ist die Entlüftungseinrichtung dem Kraftstofftank zugeordnet. Sie dient der Entlüftung des Kraftstofftanks. Auf diese Weise kann ein zu hoher Druck in dem Kraftstofftank durch die Entlüftungseinrichtung reduziert werden. Zu diesem Zweck entlüftet die Entlüftungseinrichtung den Kraftstofftank beispielsweise durch eine Entlüftungsleitung. Bei dem Entlüften kann durch die Entlüftungseinrichtung beziehungsweise die Entlüftungsleitung sowohl gasförmiger als auch flüssiger Kraftstoff aus dem Kraftstofftank heraus gelangen. Der entlüftete Kraftstoff liegt also zunächst als Gemisch aus gasförmigem und flüssigem Kraftstoff vor. Dies ist insbesondere dann der Fall, wenn das Entlüften des Kraftstofftanks bei hohem Kraftstofftankinnendruck durchgeführt wird. Dabei liegen, bedingt durch den hohen Druck beziehungsweise die große Druckdifferenz zwischen Kraftstofftankinnendruck und dem Druck außerhalb des Kraftstofftanks hohe Strömungsgeschwindigkeiten des entlüfteten Kraftstoffs vor, wodurch flüssiger Kraftstoff von dem gasförmigen Kraftstoff mitgerissen wird.

Der gasförmige Kraftstoff darf ohne weiteres der Brennkraftmaschine beziehungsweise deren Ansaugsystem zugeführt werden, wobei zwischen dem Kraftstofftank und der Brennkraftmaschine ein der Entlüftungseinrichtung zugeordneter Kraftstoffspeicher, welcher bevorzugt als Aktivkohlespeicher ausgebildet ist, angeordnet sein kann. Der Kraftstoffspeicher dient dazu, gasförmigen Kraftstoff zwischenzuspeichern, also aufzunehmen, wenn nicht benötigter gasförmiger Kraftstoff vorliegt und abzugeben, sobald der gasförmige Kraftstoff in die Brennkraftmaschine abgeführt werden kann. Es darf jedoch kein flüssiger Kraftstoff in den Kraftstoffspeicher beziehungsweise die Brennkraftmaschine gelangen.

Aus diesem Grund weist die Entlüftungseinrichtung die zumindest eine Abscheidevorrichtung auf, welche zur Trennung von gasförmigem und flüssigem Kraftstoff dient. Die Abscheidevorrichtung ist demnach dazu vorgesehen, das Überführen von flüssigem Kraftstoff von dem Kraftstofftank durch die Entlüftungseinrichtung in die Brennkraftmaschine beziehungsweise den Kraftstoffspeicher zu verhindern. Dabei scheidet die Abscheidevorrichtung flüssigen Kraftstoff ab und lässt gasförmigen Kraftstoff passieren. Der abgeschiedene flüssige Kraftstoff gelangt in den Zwischenspeicher der Abscheidevorrichtung. Der Begriff Zwischenspeicher bedeutet dabei nicht, dass tatsächlich eine (Zwischen-) Speicherung des flüssigen Kraftstoffs vorgesehen ist. Vielmehr kann der flüssige Kraftstoff unmittelbar aus dem Zwischenspeicher beziehungsweise der Abscheidevorrichtung abgeführt werden, bevorzugt in Richtung des Kraftstofftanks. Dabei kann sich jedoch, beispielsweise durch eine Begrenzung des Abführvolumenstroms, insbesondere durch einen Leitungsquerschnitt oder dergleichen, ein Anstieg des Füllstands des Zwischenspeichers ergeben. Der abgeschiedene flüssige Kraftstoff kann demnach zumindest zeitweise nicht so schnell abgeführt werden, wie er in den Zwischenspeicher eingebracht wird. Selbstverständlich ist auch eine Zwischenspeicherung des flüssigen Kraftstoffs, beispielsweise über eine bestimmte Zeitspanne, realisierbar.

Beim Betreiben des Kraftstoffsystems sollte verhindert werden, dass die sich in dem Zwischenspeicher beziehungsweise der Abscheidevorrichtung befindliche Menge des flüssigen Kraftstoffs eine Grenzmenge überschreitet, der Füllstand des Zwischenspeichers demnach größer als ein Grenzfüllstand wird, weil dies die Wirksamkeit der Abscheidevorrichtung beeinträchtigen kann. Je größer die Menge flüssigen Kraftstoffs in dem Zwischenspeicher ist, umso größer wird das Risiko, dass zusammen mit dem gasförmigen Kraftstoff auch flüssiger Kraftstoff wieder aus der Abscheidevorrichtung heraus gelangt und in Richtung des Kraftstoffspeichers beziehungsweise der Brennkraftmaschine mitgenommen wird. Aus diesem Grund kann der Abscheidevorrichtung die Kraftstofffördereinrichtung zugeordnet werden. Diese wird dazu eingesetzt, flüssigen Kraftstoff aus dem Zwischenspeicher zu fördern, insbesondere in Richtung des Kraftstofftanks. Die Kraftstofffördereinrichtung ist dabei üblicherweise als Saugstrahlpumpe ausgebildet, wobei als Betriebsmittel der Saugstrahlpumpe häufig Kraftstoff verwendet wird, welcher von einer Kraftstoffpumpe des Kraftstoffsystems aus dem Kraftstofftank in Richtung der Brennkraftmaschine gefördert wird. Das bedeutet, dass die Saugstrahlpumpe stets in Betrieb ist, sobald die Kraftstoffpumpe betrieben wird. Die Saugstrahlpumpe wird demnach auch dann betrieben, wenn in dem Zwischenspeicher kein flüssiger Kraftstoff ist. Aus diesem Grund ist der Energieverbrauch der aus dem Stand der Technik bekannten Kraftstoffsysteme sehr hoch.

WO 2007/031466 A1 zeigt ein Kraftstoffsystem gemäß dem Oberbegriff des Anspruchs 1.

Es ist demnach Aufgabe der Erfindung, ein Kraftstoffsystem vorzuschlagen, welches einen geringeren Energieverbrauch aufweist, wobei insbesondere eine Verringerung des Energieverbrauchs der Kraftstofffördereinrichtung beziehungsweise der Saugstrahlpumpe gegenüber aus dem Stand der Technik bekannten Kraftstoffsystemen realisiert ist.

Dies wird gemäß den Merkmalen des Anspruchs 1 erreicht, indem in einer Betriebsmittelleitung der Saugstrahlpumpe ein Druckminderungsglied oder ein Druckeinstellglied vorgesehen ist. Über die Betriebsmittelleitung wird der Saugstrahlpumpe das Betriebsmittel, also beispielsweise von der Kraftstoffpumpe geförderter Kraftstoff, zugeführt. Die Betriebsmittelleitung ist demnach üblicherweise als Betriebsmittelzuleitung ausgebildet. In der Betriebsmittelleitung soll nun das Druckminderungsglied beziehungsweise das Druckeinstellglied vorliegen. Sowohl mit dem Druckminderungsglied als auch dem Druckeinstellglied kann eine Reduzierung des Betriebsmitteldrucks der Saugstrahlpumpe realisiert werden. Mit dem Druckminderungsglied wird dabei zu jeder Zeit die Druckänderung erzeugt, während die Druckänderung einstellbar ist, wenn das Druckeinstellglied vorgesehen ist. Vorzugsweise ist das Druckeinstellglied dabei auch derart einstellbar, dass keine Druckreduzierung beziehungsweise Druckminderung erfolgt. Das Einstellen des Betriebsmitteldrucks mittels des Druckeinstellglieds beziehungsweise das Einstellen des Druckeinstellglieds erfolgt bevorzugt in Abhängigkeit von einem an einem Ausgang einer Kraftstoffpumpe vorliegenden Kraftstoffdruck oder dem Kraftstofftankinnendruck. Letzteres ist insbesondere bei Vorliegen eines Drucktanks vorgesehen. Mittels des Druckeinstellglieds kann der Betrieb der Saugstrahlpumpe folglich derart erfolgen, dass in einer ersten Betriebsart ein erster Betriebsmitteldruck vorgesehen ist, welcher von einem zweiten Betriebsmitteldruck in einer zweiten Betriebsart unterschiedlich ist. Durch die Druckreduzierung in zumindest einer Betriebsart des Kraftstoffsystems kann somit der Energieverbrauch der Saugstrahlpumpe und damit des Kraftstoffsystems gegenüber aus dem Stand der Technik bekannten Kraftstoffsystemen verringert werden.

Weil zudem das Betriebsmittel nach dem Durchlaufen der Saugstrahlpumpe, eventuell zusammen mit aus dem Zwischenspeicher gefördertem flüssigen Kraftstoff wieder dem Kraftstofftank zugeführt wird und durch die Druckreduzierung die Geschwindigkeit, mit welcher der geförderte Kraftstoff in den Kraftstofftank gelangt, verringert wird, wird durch die Reduzierung des Betriebsmitteldrucks zusätzlich eine Reduzierung des in dem Kraftstofftank anfallenden gasförmigen Kraftstoff gegenüber aus dem Stand der Technik bekannten Kraftstoffsystemen erreicht. Besonders vorteilhaft ist die Betriebsmittelleitung mittels des Druckeinstellglieds vollständig verschließbar beziehungsweise unterbrechbar. Das bedeutet, dass die Saugstrahlpumpe auch bei laufender Kraftstoffpumpe außer Betrieb setzbar ist, so dass keine Förderung von flüssigem Kraftstoff aus dem Zwischenspeicher erfolgt. Auf diese Weise wird eine besonders deutliche Reduzierung des Energieverbrauchs des Kraftstoffsystems erreicht. Üblicherweise verfügt die Entlüftungseinrichtung über mindestens ein Entlüftungsventil zur Entlüftung des Kraftstofftanks durch die Entlüftungseinrichtung. Es kann nun vorgesehen sein, dass die Saugstrahlpumpe nur bei und/oder für eine bestimmte Zeitspanne nach einer Betätigung des Entlüftungsventils in Betrieb ist. Es wird demnach nur dann Kraftstoff aus dem Zwischenspeicher gefördert, während das Entlüften des Kraftstofftanks erfolgt und somit flüssiger Kraftstoff in den Zwischenspeicher anfallen kann.

Eine Weiterbildung der Erfindung sieht vor, dass der Kraftstofffördereinrichtung eine Betätigungseinrichtung, insbesondere mindestens einen Elektromagnet aufweisend, zugeordnet ist. Die Betätigungseinrichtung dient dem Betätigen der Kraftstofffördereinrichtung zur Förderung von Kraftstoff aus dem Zwischenspeicher. Die Betätigungseinrichtung ist bevorzugt eine elektrische Betätigungseinrichtung, welche unabhängig von der Kraftstoffpumpe des Kraftstoffsystems betreibbar ist. Die Betätigungseinrichtung kann dabei über mindestens einen Elektromagnet verfügen.

Eine Weiterbildung der Erfindung sieht vor, dass sowohl die Kraftstofffördereinrichtung als auch als auch ein Entlüftungsventil zur Entlüftung des Kraftstofftanks durch die Entlüftungseinrichtung von der Betätigungseinrichtung betätigbar sind, insbesondere getrennt voneinander oder gemeinsam. Das Entlüftungsventil ist dabei der Entlüftungseinrichtung zugeordnet. Das Entlüftungsventil kann derart eingestellt werden, dass es zur Entlüftung des Kraftstofftanks öffnet oder zur Unterbrechung der Entlüftung schließt. Es liegt beispielsweise als FTIV (Fuel Tank Isolation Valve) vor. Das Entlüftungsventil kann als Taktventil ausgebildet sein, welches ein Einstellen von diskreten Schaltzuständen (geöffnet und geschlossen) erlaubt. Besonders bevorzugt ist das Entlüftungsventil als Stetigventil ausgelegt, welches nicht lediglich die diskreten Schaltzustände zulässt, sondern ein Einstellen des Durchströmungsquerschnitts in mehreren Stufen, besonders bevorzugt ein stetiges Einstellen, ermöglicht. Auf diese Weise ist der Volumenstrom durch die Abscheidevorrichtung, insbesondere stetig, gesteuert und/oder geregelt einstellbar. Das Entlüftungsventil kann mit der Abscheidevorrichtung oder der Kraftstofffördereinrichtung integriert sein. Das Entlüftungsventil kann also modular in die Kraftstofffördereinrichtung integriert vorliegen.

Sowohl die Kraftstofffördereinrichtung als auch das Entlüftungsventil sollen von der Betätigungseinrichtung betätigbar sein. Die Betätigungseinrichtung liegt insoweit als gemeinsame Betätigungseinrichtung vor, so dass eine einzige Betätigungseinrichtung ausreicht, um sowohl die Kraftstofffördereinrichtung als auch das Entlüftungsventil zu betätigen. Wie vorstehend bereits beschrieben, kann es vorgesehen sein, dass das Entlüftungsventil mit der Kraftstofffördereinrichtung integriert ist, also als gemeinsames Bauteil vorliegen. In diesem Fall ist bevorzugt auch eine Integration der Betätigungseinrichtung mit dem Entlüftungsventil und der Kraftstofffördereinrichtung vorgesehen. Die Betätigung kann dabei getrennt voneinander oder gemeinsam vorgesehen sein. In ersterem Fall kann mittels der Betätigungseinrichtung entweder die Kraftstofffördereinrichtung oder das Entlüftungsventil getrennt von dem jeweils anderen Element angesteuert werden. In letzterem Fall erfolgt mittels der Betätigungseinrichtung eine gleichzeitige Betätigung sowohl der Kraftstofffördereinrichtung als auch des Entlüftungsventils. Mit der gemeinsamen Betätigungseinrichtung kann demnach sowohl die Kraftstofffördereinrichtung zur Förderung von Kraftstoff aus dem Zwischenspeicher betätigt werden, als auch das Entlüften des Kraftstoffranks mittels des Entlüftungsventils bewirkt werden. Besonders bevorzugt ist hierbei die Integration von Kraftstofffördereinrichtung, Entlüftungsventil und Betätigungseinrichtung, weil somit mit einem einzigen Bauteil, welches zumindest bereichsweise in der Abscheidevorrichtung vorliegt, sowohl das Entlüften des Kraftstofftanks als auch das Entleeren des Zwischenspeichers möglich sind.

Eine Weiterbildung der Erfindung sieht vor, dass die Betätigungseinrichtung zur Durchführung einer Betätigungsbewegung in eine erste Richtung und eine der ersten Richtung entgegengesetzte zweite Richtung und/oder um einen ersten Hub und um einen zweiten, größeren Hub ansteuerbar ist, wobei die Durchführung der Betätigungsbewegung in die erste Richtung oder um den ersten Hub die Kraftstofffördereinrichtung und/oder das Entlüftungsventil und die Durchführung der Betätigungsbewegung in die zweite Richtung oder um den zweiten Hub das Entlüftungsventil und/oder die Kraftstofffördereinrichtung betätigen. In einer ersten Ausführungsform ist die Betätigungseinrichtung demnach zur Durchführung der Betätigungsbewegung in zwei Richtungen und in einer zweiten Ausführungsform zur Durchführung der Betätigungsbewegung mit zwei unterschiedlichen Hüben vorgesehen. Dabei liegt eine Wirkverbindung zwischen der Betätigungseinrichtung und der Kraftstofffördereinrichtung sowie dem Entlüftungsventil derart vor, dass in Abhängigkeit von der Richtung oder dem Hub entweder die Kraftstofffördereinrichtung oder das Entlüftungsventil betätigt wird. Auf diese Weise kann die Betätigungseinrichtung als gemeinsame Betätigungseinrichtung sowohl für die Kraftstofffördereinrichtung als auch das Entlüftungsventil ausgebildet sein, jedoch ein getrenntes, also nicht gleichzeitiges, Betätigen von Kraftstofffördereinrichtung und Entlüftungsventil erlauben.

Eine Weiterbildung der Erfindung sieht vor, dass als Betriebsmittel der Saugstrahlpumpe Kraftstoff aus dem Kraftstofftank vorgesehen ist, welcher mithilfe einer Kraftstoffpumpe in Richtung der Saugstrahlpumpe und eines Kraftstoffauslasses des Kraftstoffsystems förderbar ist. Die Kraftstoffpumpe dient demnach dazu, den Betriebsmitteldruck der Saugstrahlpumpe bereitzustellen. Die Kraftstoffpumpe und die Saugstrahlpumpe sind über die Betriebsmittelleitung miteinander strömungsverbunden. Das Druckminderungsglied oder das Druckeinstellglied liegen demnach strömungstechnisch zwischen der Kraftstoffpumpe und der Saugstrahlpumpe vor. Zusätzlich ist es üblicherweise vorgesehen, dass die Kraftstoffpumpe dazu dient, Kraftstoff in Richtung des Kraftstoffauslasses des Kraftstoffsystems zu fördern. Der Kraftstoffauslass ist beispielsweise einer Nutzmaschine, insbesondere der Brennkraftmaschine, zugeordnet.

Eine Weiterbildung der Erfindung sieht vor, dass der Betrieb der Saugstrahlpumpe in einer ersten Betriebsart mit einem ersten Betriebsmitteldruck vorgesehen ist, welcher von einem zweiten Betriebsmitteldruck in einer zweiten Betriebsart unterschiedlich ist, wobei der Kraftstoff an einem Ausgang der Kraftstoffpumpe in der ersten und der zweiten Betriebsart mit dem zweiten Betriebsmitteldruck vorliegt. Der Kraftstoff wird demnach mittels der Kraftstoffpumpe aus dem Kraftstofftank gefördert und auf den zweiten Betriebsmitteldruck gebracht, welcher an dem Ausgang der Kraftstoffpumpe vorliegt. Üblicherweise wird der Kraftstoff an dem Kraftstoffauslass mit dem zweiten Betriebsmitteldruck für die Nutzmaschine bereitgestellt. Dagegen ist es vorgesehen, dass der Betriebsmitteldruck der Saugstrahlpumpe, also der erste Betriebsmitteldruck, von dem zweiten Betriebsmitteldruck abweicht, insbesondere niedriger ist.

Eine Weiterbildung der Erfindung sieht vor, dass das Druckminderungsglied oder das Druckeinstellglied strömungstechnisch zwischen dem Ausgang der Kraftstoffpumpe und der Saugstrahlpumpe vorgesehen ist. Die Druckminderung von dem an dem Ausgang der Kraftstoffpumpe vorliegenden zweiten Betriebsmitteldruck auf den zum Betrieb der Saugstrahlpumpe verwendeten ersten Betriebsmitteldruck soll demnach zwischen dem Ausgang der Kraftstoffpumpe und einem Betriebsmitteleinlass der Saugstrahlpumpe vorliegen.

Eine Weiterbildung der Erfindung sieht vor, dass das Druckminderungsglied eine Drossel oder das Druckeinstellglied ein Querschnittsverstellglied, insbesondere ein Kaskadenschalter, ist. Die Drossel soll dabei einen konstanten Durchströmungsquerschnitt aufweisen, während der Durchströmungsquerschnitt des Querschnittsverstellglieds einstellbar ist. Dabei ist es insbesondere auch vorgesehen, den Durchströmungsquerschnitt derart einzustellen, dass die Betriebsmittelleitung unterbrochen oder vollständig freigegeben ist. Das Querschnittsverstellglied kann dabei beispielsweise als Kaskadenschalter vorliegen. Dieser ist derart ausgebildet, dass er in Abhängigkeit von einem an einem Eingang anliegenden Druck, insbesondere dem zweiten Betriebsmitteldruck, einen bestimmten Durchströmungsquerschnitt freigibt beziehungsweise versperrt.

Eine Weiterbildung der Erfindung sieht vor, dass das mindestens eine Entlüftungsventil zur Entlüftung des Kraftstofftanks durch die Abscheidevorrichtung dieser strömungstechnisch vorgeschaltet oder nachgeschaltet ist. Der Kraftstoff muss demnach für ein Durchströmen der Abscheidevorrichtung stets auch das Entlüftungsventil passieren. Bevorzugt ist das Entlüftungsventil der Abscheidevorrichtung strömungstechnisch nachgeschaltet, alternativ kann es dieser jedoch auch vorgeschaltet sein.

Eine Weiterbildung der Erfindung sieht vor, dass der Abscheidevorrichtung zumindest ein in Abhängigkeit des Kraftstofftankfüllstands schaltendes Belüftungsventil und/oder zumindest ein dem Kraftstofftank zugeordnetes Sicherheitsventil strömungstechnisch vorgeschaltet sind. Das Belüftungsventil ist insbesondere als FLVV (Fill Limit Venting Valve) ausgebildet. Ein solches ermöglicht ein Belüften des Kraftstofftanks, solange der Kraftstofftankfüllstand kleiner ist als ein bestimmter Kraftstofftankfüllstand, insbesondere Kraftstofftankmaximalfüllstand. Über das Belüftungsventil wird somit das Belüften des Kraftstofftanks, insbesondere bei einem Zuführen von Kraftstoff in den Kraftstofftank, sichergestellt. Zusätzlich oder alternativ kann das Sicherheitsventil vorgesehen sein, welches beispielsweise als Überroll-Sicherheitsventil beziehungsweise ROV (Roll Over Valve) ausgebildet ist. Sowohl das Belüftungsventil als auch das Sicherheitsventil sind üblicherweise dem Kraftstofftank zugeordnet und der Abscheidevorrichtung strömungstechnisch vorgeschaltet, so dass der Kraftstoff zunächst das Belüftungsventil beziehungsweise das Sicherheitsventil durchläuft, bevor es in die Abscheidevorrichtung gelangt.

Die Erfindung betrifft auch ein Antriebssystem mit einem Kraftstoffsystem gemäß den vorstehenden Ausführungen. Das Antriebssystem verfügt dabei insbesondere über zumindest eine Brennkraftmaschine und ist beispielsweise als Hybridantriebssystem ausgebildet.

Die Erfindung wird nachfolgend anhand der in der Zeichnung dargestellten Ausführungsbeispiele näher erläutert, ohne dass eine Beschränkung der Erfindung erfolgt. Dabei zeigen:
- Figur 1: eine schematische Darstellung eines Kraftstoffsystems in einer ersten Ausführungsform,
- Figur 2: das Kraftstoffsystem in einer zweiten Ausführungsform, und
- Figur 3: ein Druckeinstellglied des Kraftstoffsystems.

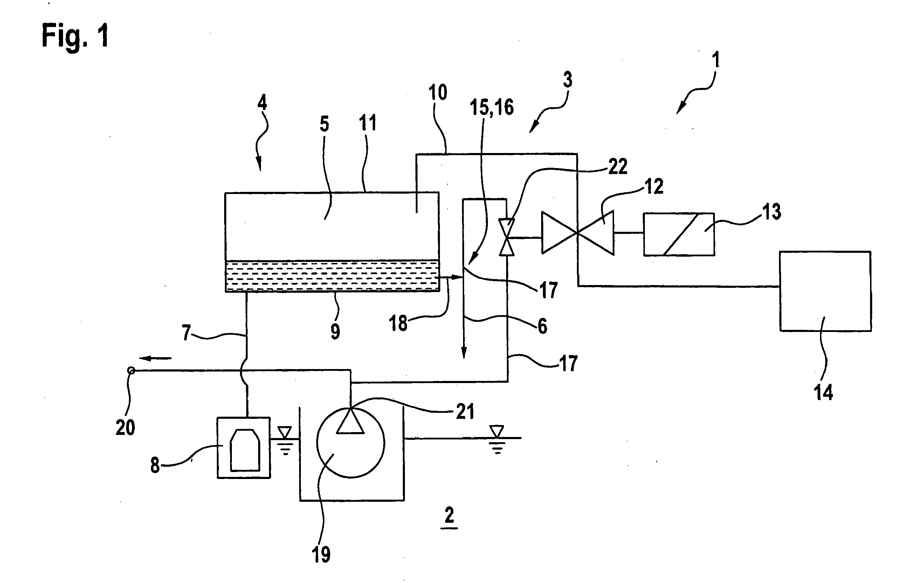

Die Figur 1 zeigt eine schematische Darstellung eines Kraftstoffsystems 1. Das Kraftstoffsystem 1 ist beispielsweise Bestandteil eines Kraftfahrzeugs beziehungsweise eines Antriebssystems des Kraftfahrzeugs. Das Kraftstoffsystem 1 verfügt über einen Kraftstofftank 2 und eine Entlüftungseinrichtung 3 zur Entlüftung des Kraftstofftanks 1. Die Entlüftungseinrichtung 3 weist eine Abscheidevorrichtung 4 mit einem Zwischenspeicher 5 auf. Die Abscheidevorrichtung 4 dient dazu, flüssigen Kraftstoff aus einem Gemisch von flüssigem und gasförmigem Kraftstoff abzuscheiden. Der abgeschiedene flüssige Kraftstoff liegt anschließend in dem Zwischenspeicher 5 vor und kann, beispielsweise durch eine Rückführungsleitung 6, wieder dem Kraftstofftank 2 zugeführt werden. Die Rückführungsleitung 6 weist bevorzugt ein Ventil, insbesondere Drainageventil beziehungsweise Rückschlagventil, auf. Anstelle der Rückführungsleitung 6 kann auch lediglich das Ventil vorgesehen sein, insbesondere wenn die Abscheidevorrichtung 4 zumindest bereichsweise in dem Kraftstofftank 2 vorliegt, so dass durch das Ventil aus dem Zwischenspeicher 5 austretender Kraftstoff unmittelbar in den Kraftstofftank gelangt. Das Ventil ist derart ausgebildet, dass Kraftstoff durch die Rückführungsleitung 6 lediglich aus dem Zwischenspeicher 5 herausgelangen, nicht jedoch in ihn hineingelangen kann. Somit wird verhindert, dass durch die Rückführungsleitung 6 Kraftstoff aus dem Kraftstofftank 2 in den Zwischenspeicher 5 gelangt.

Die Entlüftungseinrichtung 3 steht über eine Entlüftungsleitung 7 in Strömungsverbindung mit dem Kraftstofftank 2. Auf der dem Kraftstofftank 2 zugewandten Seite der Entlüftungsleitung 7 beziehungsweise in dem Kraftstofftank 2 ist dabei ein Belüftungsventil 8 vorgesehen, welches in Abhängigkeit des Kraftstofftankfüllstands schaltet. Üblicherweise ist das Belüftungsventil 8 derart ausgeführt, dass es nur bei einem Kraftstofftankfüllstand unterhalb eines bestimmten Kraftstofftankfüllstands, insbesondere eines Maximalkraftstofftankfüllstands, geöffnet ist, also Kraftstoff, insbesondere gasförmiger Kraftstoff, aus dem Kraftstofftank in die Entlüftungsleitung 7 gelangen kann. Die Entlüftungsleitung 7 mündet in den Zwischenspeicher 5 der Abscheidevorrichtung 4 ein, bevorzugt durch einen Boden 9 des Zwischenspeichers 5. Beabstandet von der Entlüftungsleitung 7 beziehungsweise deren Mündungsstelle in den Zwischenspeicher 5 mündet eine Auslassleitung 10 in den Zwischenspeicher 5 ein, bevorzugt durch eine Decke 11 des Zwischenspeichers 5. Die Mündungsstelle der Auslassleitung 10 in den Zwischenspeicher 5 ist damit bevorzugt derart angeordnet, dass lediglich gasförmiger Kraftstoff aus dem Zwischenspeicher 5 in die Auslassleitung 10 gelangen kann. Dazu sind die Mündungsstellen von Auslassleitung 10 und Entlüftungsleitung 7 bevorzugt an gegenüberliegenden Seiten des Zwischenspeichers 5 angeordnet. Die Auslassleitung 10 weist ein Entlüftungsventil 12 auf, welches mittels einer Betätigungseinrichtung 13 betätigbar ist. Das Entlüftungsventil 12 und die Betätigungseinrichtung 13 sind dabei bevorzugt derart ausgebildet, dass der Durchströmungsquerschnitt des Entlüftungsventils 12 stetig einstellbar ist. Auf der der Abscheidevorrichtung 4 abgewandten Seite mündet die Auslassleitung 10 in einen Kraftstoffspeicher 14, insbesondere einen Aktivkohlespeicher, ein. Der Kraftstoffspeicher 14 dient der Zwischenspeicherung von gasförmigem Kraftstoff.

Die Abscheidevorrichtung 4 ist üblicherweise zumindest bereichsweise, insbesondere vollständig, in dem Kraftstofftank 2, angeordnet. Auch eine Anordnung außerhalb des Kraftstofftanks 2 ist jedoch möglich. Alternativ kann die Abscheidevorrichtung 4 auch in eine Leitung, beispielsweise die Entlüftungsleitung 7, integriert sein. In einer bevorzugten Ausführungsform ist die Abscheidevorrichtung derart ausgebildet, dass sie beziehungsweise die Entlüftungseinrichtung 3 einen bestimmten Druckverlust aufweist. Dieser ist dabei derart gewählt, dass bei einem Entlüften der Kraftstofftanks 2 mittels der Entlüftungseinrichtung 3 ein eventuell vorhandenes Ventil, beispielsweise das Belüftungsventil 8, nicht in dessen Geschlossenstellung gebracht wird. Das Belüftungsventil 8 weist üblicherweise einen Schwimmer auf, welcher einen Ventilsitz des Belüftungsventils 8 freigibt, solange der Kraftstofftankfüllstand kleiner als ein bestimmter Kraftstofftankfüllstand ist. Wird der mittels der Entlüftungseinrichtung 3, also durch das Belüftungsventil 8, abgeführte Volumenstrom größer als ein Auslegungsvolumenstrom, so kann der Schwimmer von dem Volumenstrom beziehungsweise dem entlüfteten Kraftstoff in den Ventilsitz, also in die Geschlossenstellung verlagert werden, so dass ein weiteres Entlüften des Kraftstofftanks 2 nicht möglich ist. Dies gilt insbesondere bei vollständig geöffnetem Entlüftungsventil 12.

Üblicherweise wird der Druckverlust der Entlüftungseinrichtung 3 durch Anpassen des Entlüftungsventils 12 eingestellt, beispielsweise durch Einbringen eines Drosselelements. Hier soll es nun bevorzugt vorgesehen sein, dass der Druckverlust der Entlüftungseinrichtung 3 durch Anpassen der Abscheidevorrichtung 4 beziehungsweise deren Druckverlust erfolgt, beispielsweise durch Vorsehen eines angepassten Drosselelements. Das Entlüftungsventil 12 weist demnach bevorzugt kein Drosselelement auf. Das Drosselelement kann jedoch selbstverständlich zusätzlich vorgesehen sein.

Um Kraftstoff aus dem Zwischenspeicher 5 in Richtung des Kraftstofftanks 2 zu fördern, weist die Abscheidevorrichtung 4 eine Kraftstofffördereinrichtung 15 auf, welche als Saugstrahlpumpe 16 ausgebildet ist. Die Saugstrahlpumpe 16 weist eine Betriebsmittelleitung 17 und Ansaugleitung 18 auf. Bei einem Betrieb der Saugstrahlpumpe 16 wird die Betriebsmittelleitung 17 von Betriebsmittel durchströmt. Die Saugleitung 18 mündet dabei in einem Bereich in die Betriebsmittelleitung 17 ein, in welchem letztere einen abschnittsweise verringerten Querschnitt aufweist, so dass beispielsweise eine Venturidüse vorliegt. Die Saugleitung 18 mündet in den Zwischenspeicher 5 derart ein, dass ihre Mündung in einem Bereich angeordnet ist, in welchem üblicherweise flüssiger Kraftstoff in dem Zwischenspeicher 5 vorliegt. Die Mündung der Saugleitung 18 wird demnach üblicherweise im Bereich des Bodens 9 angeordnet sein. Die Betriebsmittelleitung 17 ist an eine Kraftstoffpumpe 19 angeschlossen, welche dem Kraftstofftank 2 zugeordnet ist und der Förderung von Kraftstoff aus dem Kraftstofftank 2 dient. Üblicherweise ist die Kraftstoffpumpe 19 dazu vorgesehen, den Kraftstoff sowohl in Richtung eines Kraftstoffauslasses 20 des Kraftstoffsystems 1 als auch in Richtung der Saugstrahlpumpe 16 zu fördern. Sowohl die Betriebsmittelleitung 17 als auch der Kraftstoffauslass sind demnach strömungstechnisch mit einem Ausgang 21 der Kraftstoffpumpe 19 verbunden.

In der Betriebsmittelleitung 17 ist ein Druckeinstellglied 22 vorgesehen, welches entweder als diskretes Ventil oder als Stetigventil vorliegen kann. Das Druckeinstellglied 23 liegt insofern als Querschnittsverstellglied vor. Das Druckeinstellglied 22 dient dazu, die Betriebsmittelleitung 17 zu unterbrechen oder für eine Durchströmung mit dem von der Kraftstoffpumpe 19 geförderten Kraftstoff freizugeben. Ist das Druckeinstellglied 23 als Stetigventil ausgebildet, so kann es zusätzlich vorgesehen sein, dass ein erster, an der Saugstrahlpumpe 16 anliegender Betriebsmitteldruck gesteuert und/oder geregelt einstellbar ist, während an dem Ausgang 21 der Kraftstoffpumpe 19 ein zweiter Betriebsmitteldruck vorliegt. Der erste Betriebsmitteldruck kann in Abhängigkeit von dem an dem Ausgang 21 vorliegenden Druck und/oder dem Kraftstofftankinnendruck gewählt sein.

In der in der Figur 1 dargestellten Ausführungsform des Kraftstoffsystems 1 sind sowohl das Druckeinstellglied 22 als auch das Entlüftungsventil 12 mittels der Betätigungseinrichtung 13 betätigbar. Die Betätigungseinrichtung 13 liegt insofern als gemeinsame Betätigungseinrichtung vor. Zu diesem Zweck kann die Betätigungseinrichtung 13 beispielsweise dazu ausgebildet sein, Betätigungsbewegungen in eine erste Richtung und in eine der ersten Richtung entgegengesetzte zweite Richtung durchzuführen. Alternativ kann die Betätigungseinrichtung 13 auch zur Durchführung der Betätigungsbewegungen um einen ersten Hub oder um einen zweiten, größeren Hub vorgesehen sein. Dabei soll die Durchführung der Betätigungsbewegung in die erste Richtung oder um den ersten Hub mittels des Druckeinstellglieds 22 die Kraftstofffördereinrichtung 15 und die Durchführung der Betätigungsbewegung in die zweite Richtung oder um den zweiten Hub das Entlüftungsventil 12 betätigen oder umgekehrt. Selbst verständlich kann es auch vorgesehen sein, dass die Betätigungseinrichtung 13 lediglich für eine gemeinsame und gleichzeitige Betätigung von Entlüftungsventil 12 und Kraftstofffördereinrichtung 15 ausgebildet sein. In diesem Fall wird die Betriebsmittelleitung 17 mittels des Druckeinstellglieds 22 nur dann freigegeben, wenn eine Entlüftung des Kraftstofftanks 2 mittels des Entlüftungsventils 12 erfolgt, so dass nur in diesem Fall die Kraftstofffördereinrichtung 15 zur Förderung von Kraftstoff aus dem Zwischenspeicher 5 in Richtung des Kraftstofftanks 2 betrieben wird. Auf diese Weise erfolgt der Betrieb der Saugstrahlpumpe 16 beziehungsweise der Kraftstofffördereinrichtung 15 nur, wenn dies auch tatsächlich notwendig ist. Auf diese Weise kann der Energieverbrauch der Kraftstofffördereinrichtung 15 und damit des Kraftstoffsystems 1 gegenüber aus dem Stand der Technik bekannten Systemen reduziert werden.

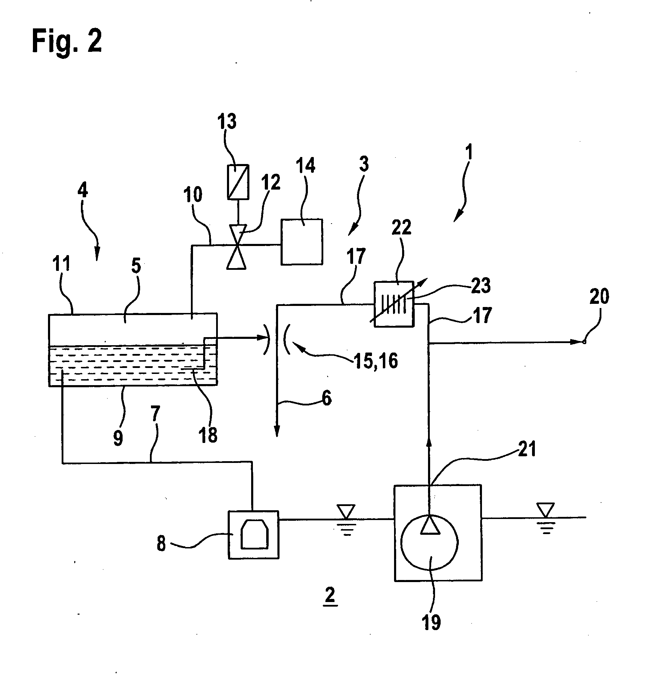

Die Figur 2 zeigt eine weitere Ausführungsform des Kraftstoffsystems 1. Der Aufbau des in der Figur 2 gezeigten Kraftstoffsystems 1 entspricht im Wesentlichen dem anhand der Figur 1 beschriebenen, so dass insofern auf die vorstehenden Ausführungen verwiesen sei. In der Ausführungsform der Figur 2 liegt jedoch keine Wirkverbindung zwischen der Betätigungseinrichtung 13 und dem Druckeinstellglied 22 vor. Vielmehr ist das Druckeinstellglied 22 als passives Querschnittsverstellglied, insbesondere als Kaskadenschalter 23 ausgebildet. Der Kaskadenschalter 23 stellt dabei in Abhängigkeit von dem von der Kraftstoffpumpe 19 erzeugten zweiten Betriebsmitteldruck einen bestimmten Durchströmungsquerschnitt und somit den an der Saugstrahlpumpe 16 anliegenden ersten Betriebsmitteldruck ein. Dabei ist insbesondere vorgesehen, dass der Durchströmungsquerschnitt umso kleiner ist, je höher der von der aus Kraftstoffpumpe 19 erzeugte zweite Betriebsmitteldruck ist. Auf diese Weise kann der Energiebedarf der Saugstrahlpumpe 16 und damit des Kraftstoffsystems 1 deutlich reduziert werden. Anstelle des Druckeinstellglieds 22 kann selbstverständlich auch ein Druckminderungsglied (hier nicht dargestellt) vorgesehen sein. Dieses weist einen nicht einstellbaren Querschnitt auf und dient der Verringerung des zweiten Betriebsmitteldruck auf den ersten Betriebsmitteldruck.

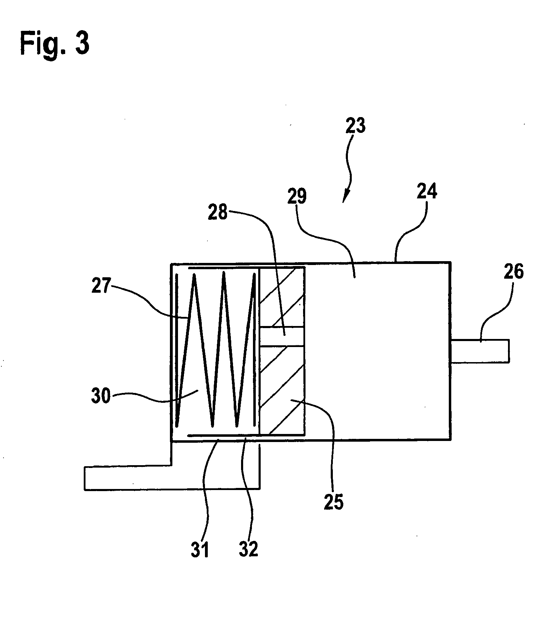

Die Figur 3 zeigt den Kaskadenschalter 23. Es wird deutlich, dass der Kaskadenschalter 23 aus einem Zylinder 24 und einem darin längsbeweglich gelagerten Kolben 25 besteht. An einem Eingang 26 des Kaskadenschalters 23 liegt der zweite Betriebsmitteldruck an, der Eingang 26 ist demnach mit der Kraftstoffpumpe strömungsverbunden. Der von dem zweiten Betriebsmitteldruck auf den Kolben 25 ausgeübten Kraft wirkt eine von einer Feder 27 erzeugte Federkraft entgegen. Die Federkraft 27 drängt insoweit den Kolben 25 in Richtung des Eingangs 26. Je höher der zweite Betriebsmitteldruck ist, umso weiter wird der Kolben 25 in Richtung der Feder 27 gedrängt und diese damit komprimiert. Durch eine den Kolben 25 durchgreifende Ausnehmung 28 kann Betriebsmittel aus einer ersten Kammer 29, welche mit dem Eingang 26 strömungsverbunden ist, in eine zweite Kammer 30 gelangen. Die Kammern 29 und 30 sind ansonsten von dem Kolben 25 voneinander getrennt. Die zweite Kammer 30 ist mit einem Ausgang 31 und dieser mit der Saugstrahlpumpe 16 strömungsverbunden. Aus der Figur 3 wird deutlich, dass ein Durchströmungsquerschnitt 32 des Ausgangs 31 umso mehr von dem Kolben 25 verdeckt wird, je weiter dieser in Richtung der Feder 27 gedrängt wird. Der Durchströmungsquerschnitt 33 wird demnach umso kleiner, je höher der an dem Eingang 26 anliegende zweite Betriebsmitteldruck ist. Auf diese Weise wird ein passives Einstellen des ersten Betriebsmitteldruck, welcher an der Saugstrahlpumpe 16 anliegt, in Abhängigkeit von dem zweiten Betriebsmitteldruck erreicht. Ist der Kraftstofftank 2 ein Drucktank, so kann der zweite Betriebsmitteldruck dem Kraftstofftankinnendruck entsprechen.

### BEZUGSZEICHENLISTE

- 1: Kraftstoffsystem
- 2: Kraftstofftank
- 3: Entüftungseinrichtung
- 4: Abscheidevorrichtung
- 5: Zwischenspeicher
- 6: Rückfhrungsleitung
- 7: Entütungsteitung
- 8: Beüftungsventil
- 9: Boden
- 10: Auslassleitung
- 11: Decke
- 12: Entüftungsventil
- 13: Befätigungseinrichtung
- 14: Kraftstoffspeicher
- 15: Kraftstoffördereinrichtung
- 16: Saugstrahlpumpe
- 17: Betriebsmittelleitung
- 18: Saugleitung
- 19: Kraftstoffpumpe
- 20: Kraftstoffauslass
- 21: Ausgang
- 22: Druckeinstellglied
- 23: Kaskadenschalter
- 24: Zylinder
- 25: Kolben
- 26: Eingang
- 27: Feder
- 28: Ausnehmung
- 29: Erste Kammer
- 30: Zweite Kammer
- 31: Ausgang
- 32: Durchstömungsquerschnitt

## Patentansprüche

1. Kraftstoffsystem (1), insbesondere eines Kraftfahrzeugs, mit einem Kraftstofftank (2) und einer Entlüftungseinrichtung (3) zur Entlüftung des Kraftstofftanks (2), wobei die Entlüftungseinrichtung (3) über zumindest eine einen Zwischenspeicher (5) für flüssigen Kraftstoff aufweisende Abscheidevorrichtung (4) und eine als Saugstrahlpumpe (16) ausgebildete Kraftstofffördereinrichtung (15) zur Förderung von Kraftstoff aus dem Zwischenspeicher (5) verfügt, **dadurch gekennzeichnet, dass** in einer Betriebsmittelleitung (17) der Saugstrahlpumpe (16) ein Druckminderungsglied oder ein Druckeinstellglied (20) vorgesehen ist.

2. Kraftstoffsystem nach Anspruch 1, **dadurch gekennzeichnet, dass** der Kraftstofffördereinrichtung (15) eine Betätigungseinrichtung (13), insbesondere mindestens einen Elektromagnet aufweisend, zugeordnet ist.

3. Kraftstoffsystem nach einem der vorhergehenden Ansprüche, **dadurch gekennzeichnet, dass** sowohl die Kraftstofffördereinrichtung (15) als auch ein Entlüftungsventil (12) zur Entlüftung des Kraftstofftanks (2) durch die Entlüftungseinrichtung (3) von der Betätigungseinrichtung (13) betätigbar sind, insbesondere getrennt voneinander oder gemeinsam.

4. Kraftstoffsystem nach einem der vorhergehenden Ansprüche, **dadurch gekennzeichnet, dass** die Betätigungseinrichtung (13) zur Durchführung einer Betätigungsbewegung in eine erste Richtung und eine der ersten Richtung entgegengesetzte zweite Richtung und/oder um einen ersten Hub und um einen zweiten, größeren Hub ansteuerbar ist, wobei die Durchführung der Betätigungsbewegung in die erste Richtung oder um den ersten Hub die Kraftstofffördereinrichtung (15) und/oder das Entlüftungsventil (12) und die Durchführung der Betätigungsbewegung in die zweite Richtung oder um den zweiten Hub das Entlüftungsventil (12) und/oder die Kraftstofffördereinrichtung (15) betätigen.

5. Kraftstoffsystem nach einem der vorhergehenden Ansprüche, **dadurch gekennzeichnet, dass** als Betriebsmittel der Saugstrahlpumpe (16) Kraftstoff aus dem Kraftstofftank (2) vorgesehen ist, welcher mithilfe einer Kraftstoffpumpe (19) in Richtung der Saugstrahlpumpe (16) und eines Kraftstoffauslasses (20) des Kraftstoffsystems (1) förderbar ist.

6. Kraftstoffsystem nach einem der vorhergehenden Ansprüche, **dadurch gekennzeichnet, dass** der Betrieb der Saugstrahlpumpe (16) in einer ersten Betriebsart mit einem ersten Betriebsmitteldruck vorgesehen ist, welcher von einem zweiten Betriebsmitteldruck in einer zweiten Betriebsart unterschiedlich ist, wobei der Kraftstoff an einem Ausgang (21) der Kraftstoffpumpe (19) in der ersten und der zweiten Betriebsart mit dem zweiten Betriebsmitteldruck vorliegt.

7. Kraftstoffsystem nach einem der vorhergehenden Ansprüche, **dadurch gekennzeichnet, dass** das Druckminderungsglied oder das Druckeinstellglied (20) strömungstechnisch zwischen dem Ausgang (21) der Kraftstoffpumpe (19) und der Saugstrahlpumpe (16) vorgesehen ist.

8. Kraftstoffsystem nach einem der vorhergehenden Ansprüche, **dadurch gekennzeichnet, dass** das Druckminderungsglied eine Drossel oder das Druckeinstellglied (32) ein Querschnittsverstellglied, insbesondere ein Kaskadenschalter (23), ist.

9. Kraftstoffsystem nach einem der vorhergehenden Ansprüche, **dadurch gekennzeichnet, dass** das mindestens eine Entlüftungsventil (12) zur Entlüftung des Kraftstofftanks (2) durch die Abscheidevorrichtung (4) dieser strömungstechnisch vorgeschaltet oder nachgeschaltet ist.

10. Kraftstoffsystem nach einem der vorhergehenden Ansprüche, **dadurch gekennzeichnet, dass** der Abscheidevorrichtung (4) zumindest ein in Abhängigkeit des Kraftstofftankfüllstands schaltendes Belüftungsventil (8) und/oder zumindest ein dem Kraftstofftank (2) zugeordnetes Sicherheitsventil strömungstechnisch vorgeschaltet sind.

## Claims

1. Fuel system (1), in particular of a motor vehicle, comprising a fuel tank (2) and a ventilation device (3) for ventilating the fuel tank (2), the ventilation device (3) having at least one separation device (4), said separation device having a temporary accumulator (5) for liquid fuel, and a fuel delivery device (15) for delivering fuel from the temporary accumulator (5), said fuel delivery device being configured as a suction jet pump (16), **characterised in that** a pressure reducing element or a pressure adjustment element (20) is provided in an operating medium line (17) of the suction jet pump (16).

2. Fuel system according to claim 1, **characterised in that** an actuation device (13), in particular having at least one electromagnet, is assigned to the fuel delivery device (15).

3. Fuel system according to either of the preceding claims, **characterised in that** the fuel delivery device (15) and a ventilation valve (12) for ventilating the fuel tank (2) through the ventilation device (3) are actuatable by the actuation device (13), in particular separately from one another or jointly.

4. Fuel system according to any of the preceding claims, **characterised in that** the actuation device (13) can be controlled to carry out an actuation movement in a first direction and a second direction which is opposite to the first direction and/or by a first lift and by a second, greater lift, carrying out the actuation movement in the first direction or by the first lift actuating the fuel delivery device (15) and/or the ventilation device (12) and carrying out the actuation movement in the second direction or by the second lift actuating the ventilation valve (12) and/or the fuel delivery device (15).

5. Fuel system according to any of the preceding claims, **characterised in that** fuel from the fuel tank (2) is provided as operating medium for the suction jet pump (16), said fuel being deliverable in the direction of the suction jet pump (16) and of a fuel outlet (20) of the fuel system (1) by means of a fuel pump (19).

6. Fuel system according to any of the preceding claims, **characterised in that** the suction jet pump (16) is operated in a first operating mode with a first operating medium pressure which is different from a second operating medium pressure in a second operating mode, the fuel at an outlet (21) of the fuel pump (19) having the second operating medium pressure in the first and the second operating mode.

7. Fuel system according to any of the preceding claims, **characterised in that** the pressure reducing element or the pressure adjustment element (20) is provided, in terms of flow, between the outlet (21) of the fuel pump (19) and the suction jet pump (16).

8. Fuel system according to any of the preceding claims, **characterised in that** the pressure reducing element is a throttle or the pressure adjustment element (32) is a cross-section adjustment element, in particular a cascade switch (23).

9. Fuel system according to any of the preceding claims, **characterised in that** the at least one ventilation valve (12) for ventilating the fuel tank (2) through the separation device (4) is arranged upstream or downstream thereof in terms of flow.

10. Fuel system according to any of the preceding claims, **characterised in that** at least one aeration valve (8) which switches depending on the fill level of the fuel tank and/or at least one safety valve which is assigned to the fuel tank (2) are arranged upstream of the separation device (4) in terms of flow.

## Revendications

1. Système de carburant (1), notamment d'un véhicule automobile, avec un réservoir de carburant (2) et avec un dispositif dégazeur (3) pour dégazer le réservoir de carburant (2), le dispositif dégazeur (3) disposant d'au moins un dispositif séparateur (4) comportant un réservoir intermédiaire (5) pour du carburant liquide et d'un dispositif de refoulement de carburant (15) conçu comme une pompe à jet aspirant (16) pour refouler le carburant hors du réservoir intermédiaire (5), **caractérisé en ce qu'**il est prévu un élément réducteur de pression ou un élément régulateur de pression (20) dans une conduite de fluide de fonctionnement (17) de la pompe à jet aspirant (16).

2. Système de carburant selon la revendication 1, **caractérisé en ce qu'**il est associé au dispositif de refoulement de carburant (15) un dispositif d'actionnement (13), comportant notamment au moins un électroaimant.

3. Système de carburant selon l'une des revendications précédentes, **caractérisé en ce que** le dispositif de refoulement de carburant (15) et une soupape de dégazage (12) pour le dégazage du réservoir de carburant (2) par le dispositif dégazeur (3) peuvent être actionnés par le dispositif d'actionnement (13), notamment séparément l'un de l'autre ou conjointement.

4. Système de carburant selon l'une des revendications précédentes, **caractérisé en ce que** le dispositif d'actionnement (13) peut être commandé pour la mise en oeuvre d'un mouvement d'actionnement dans une première direction et dans une deuxième direction opposée à la première direction et/ou d'une première amplitude et d'une deuxième amplitude supérieure, la mise en oeuvre du mouvement d'actionnement dans la première direction ou de la première amplitude actionnant alors le dispositif de refoulement de carburant (15) et/ou la soupape de dégazage (12) et la mise en oeuvre du mouvement d'actionnement dans la deuxième direction ou de la deuxième amplitude actionnant alors la soupape de dégazage (12) et/ou le dispositif de refoulement de carburant (15).

5. Système de carburant selon l'une des revendications précédentes, **caractérisé en ce qu'**il est prévu comme fluide de fonctionnement de la pompe à jet aspirant (16) du carburant qui est issu du réservoir de carburant (2) et qui peut être refoulé à l'aide d'une pompe à carburant (19) en direction de la pompe à jet aspirant (16) et d'une sortie de carburant (20) du système de carburant (1).

6. Système de carburant selon l'une des revendications précédentes, **caractérisé en ce que** le fonctionnement de la pompe à jet aspirant (16) est prévu dans un premier mode de fonctionnement avec une première pression de fluide de fonctionnement qui est différente d'une deuxième pression de fluide de fonctionnement dans un deuxième mode de fonctionnement, le carburant se présentant à une sortie (21) de la pompe à carburant (19) dans le premier et dans le deuxième mode de fonctionnement avec la deuxième pression de fluide de fonctionnement.

7. Système de carburant selon l'une des revendications précédentes, **caractérisé en ce que** l'élément réducteur de pression ou l'élément régulateur de pression (20) est prévu, du point de vue de la technique des fluides, entre la sortie (21) de la pompe à carburant (19) et la pompe à jet aspirant (16).

8. Système de carburant selon l'une des revendications précédentes, **caractérisé en ce que** l'élément réducteur de pression est un étranglement ou l'élément régulateur de pression (32) un élément régulateur de section transversale, notamment un commutateur à cascade (23).

9. Système de carburant selon l'une des revendications précédentes, **caractérisé en ce que** la ou les soupapes de dégazage (12) pour le dégazage du réservoir de carburant (2) à travers le dispositif séparateur (4) sont branchées, du point de vue de la technique des fluides, en amont ou en aval de celui-ci.

10. Système de carburant selon l'une des revendications précédentes, **caractérisé en ce qu'**au moins une soupape de dégazage (8) commutant en fonction du niveau de réservoir de carburant et/ou au moins une soupape de sécurité associée au réservoir de carburant (2) sont branchées, du point de vue de la technique des fluides, en amont du dispositif séparateur (4).
